(19)
Europäisches Patentamt
European Patent Office
Office européen des brevets

(11) EP 0 531 089 B1

(12) EUROPEAN PATENT SPECIFICATION

(45) Date of publication and mention of the grant of the patent:
**05.02.1997 Bulletin 1997/06**

(51) Int. Cl.$^{6}$: **B60H 1/32**

(21) Application number: **92307922.2**

(22) Date of filing: **01.09.1992**

# (54) Automotive air conditioning system having refrigerant compressor with externally controlled variable displacement mechanism

Fahrzeugklimaanlage mit einem, eine fremdgesteuert einstellbare Verdrängungseinrichtung aufweisenden, Kühlflüssigkeitskompressor

Système de conditionnement d'air à compresseur réfrigerant avec contrôle externe du mécanisme de déplacement variable

(84) Designated Contracting States:
**DE FR GB IT SE**

(30) Priority: **02.09.1991 JP 246456/91**
**02.09.1991 JP 246457/91**

(43) Date of publication of application:
**10.03.1993 Bulletin 1993/10**

(73) Proprietor: **SANDEN CORPORATION**
**Isesaki-shi Gunma, 372 (JP)**

(72) Inventor: **Taguchi, Yukihiko,**
**c/o Sanden Corporation**
**Isesaki-shi, Gunma 372 (JP)**

(74) Representative: **Jackson, Peter Arthur**
**GILL JENNINGS & EVERY**
**Broadgate House**
**7 Eldon Street**
**London EC2M 7LH (GB)**

(56) References cited:
**DE-A- 3 822 465** **GB-A- 2 217 876**
**US-A- 5 022 232**

- **PATENT ABSTRACTS OF JAPAN vol. 13, no. 133 (M-809)(3481) 4 April 1989; & JP-A-63 301 118 (TOYOTA ) 8 December 1988**
- **PATENT ABSTRACTS OF JAPAN vol. 7, no. 47 (M-196)(107) 24 February 1983; & JP-A-57 195 884 (TOYODA JIDO SHOKKI SEISAKUSHO K.K. )**
- **PATENT ABSTRACTS OF JAPAN vol. 13, no. 22 (M-786)(3370) 19 January 1989; & JP-A-63 232 019 ( MAZDA )**
- **PATENT ABSTRACTS OF JAPAN vol. 13, no. 14 (M-784)(3362) 13 January 1989; & JP-A-63 227 413 ( MAZDA )**
- **PATENT ABSTRACTS OF JAPAN vol. 5, no 18 (M-53)(690) 3 February 1981; & JP-A-55 148 614 ( YOSHIMITSU KIDO )**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 531 089 B1

Printed by Rank Xerox (UK) Business Services
2.13.13/3.4

## Description

The present invention relates to an automotive air conditioning system, and more particularly, to an automotive air conditioning system which includes a refrigerant compressor with an externally controlled variable displacement mechanism.

Generally, in an automotive air conditioning system, a refrigerant compressor is intermittently driven by an automobile engine through an electromagnetic clutch which is associated with the compressor in response to changes in the demand for air conditioning in an automobile passenger compartment so that temperature of air in the automobile passenger compartment is maintained at the required temperature. According to Japanese Patent Application Publication No. 55-148614, when the amount of demand for acceleration of the automobile is equal to or greater than one certain value, operation of the refrigerant compressor is stopped by means of deenergization of the electromagnetic clutch so that the power outputted from the automobile engine is effectively used for driving the automobile. However, this manner of stopping operation of the refrigerant compressor causes an inadequate air conditioning in the automobile passenger compartment because that no air conditioning is carried out in the automobile passenger compartment due to a stop of operation of the refrigerant compressor.

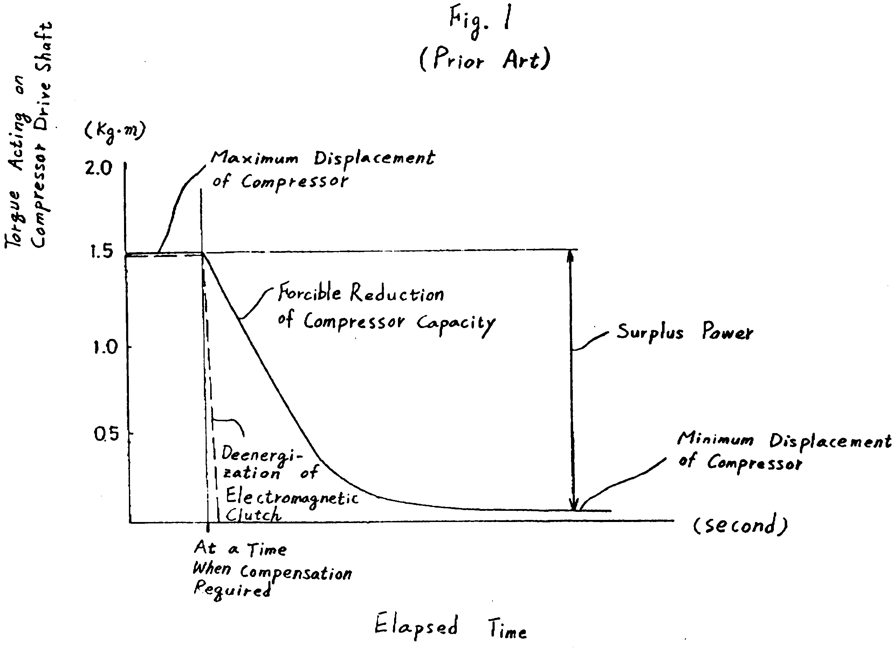

In order to resolve this drawback, Japanese Patent Application publication No. 57-195884 discloses an automobile air conditioning system which includes a refrigerant compressor with an externally controlled variable displacement mechanism. According to this Japanese Patent Application Publication, when the amount of demand for acceleration of the automobile is equal to or greater than one certain value, a capacity of the refrigerant compressor is forcibly reduced to the minimum displacement so as to produce a surplus power which is shared with driving the automobile. However, when the capacity of the refrigerant compressor is forcibly reduced to the minimum displacement in the smaller displacement stage, a negligible amount of the surplus power is produced while the air conditioning in the automobile passenger compartment is inadequately carried out. Therefore, when the amount of demand for acceleration of the automobile is equal to or greater than one certain value in the smaller compressor displacement stage, the capacity of the compressor is merely uselessly controlled. Furthermore, as shown in Figure 1, when the capacity of the refrigerant compressor is forcibly reduced to the minimum displacement in the larger displacement stage, a sufficient amount of the surplus power can not be instantly obtained in comparison with the manner of stopping operation of the compressor by means of deenergization of the electromagnetic clutch. Therefore, when the amount of demand for acceleration of the automobile is equal to or greater than one certain value in the larger compressor displacement stage, a reduction of the accelerating performance of the automobile due to operation of the compressor is not quickly sufficiently compensated.

US-A-5022232 discloses an automotive air conditioning system including a compressor with a variable displacement mechanism, an evaporator forming a part of the automotive air conditioning system, controlling means for controlling operation of the compressor, and a transmitting means for intermittently transmitting power for moving an automobile to the compressor, the controlling means including sensing means for sensing a heat load on the evaporator, sensing means for sensing an amount of demand for acceleration of the automobile, sensing means for sensing an amount of torque acting on a drive shaft of the compressor; judging means for judging whether the amount of the torque acting on the drive shaft of the compressor is smaller than a first predetermined amount, greater than a second predetermined amount which is greater than the first predetermined amount, or equal to or greater than the first predetermined amount but equal to or smaller than the second predetermined amount; operating means for selectively operating the transmitting means and the variable displacement mechanism in response to a judgement of the judging means.

Accordingly, it is an object of the present invention to provide an automotive air conditioning system which can quickly and adequately compensate a reduction of the accelerating performance of an automobile without sacrificing an adequate air conditioning in an automobile passenger compartment during operation of the automotive air conditioning system.

According to a first aspect of the present invention an automotive air conditioning system including a compressor with a variable displacement mechanism, an evaporator forming a part of the automotive air conditioning system, controlling means for controlling operation of the compressor, and a transmitting means for intermittently transmitting power for moving an automobile to the compressor, the controlling means including a sensor for sensing a heat load on the evaporator; a switching device for sensing an amount of demand for acceleration of the automobile; first control unit for determining an amount of torque acting on a drive shaft of the compressor; a second control unit for judging whether the amount of demand for acceleration of the automobile is equal to or greater than a predetermined amount, and for judging whether the amount of the torque acting on the drive shaft of the compressor is smaller than a first predetermined amount, greater than a second predetermined amount which is greater than the first predetermined amount, or equal to or greater than the first predetermined amount but equal to or smaller than the second predetermined amount; a third control unit for selectively operating the transmitting means and the variable displacement mechanism in response to a judgement of the second control unit, the third control unit operating the variable displacement mechanism so as to vary a capacity of the compressor from the minimum to the maximum value thereof in response to changes in the heat load on the evaporator when the amount of demand for acceleration of the automobile is smaller than the predetermined amount, or both when the amount of demand for acceleration of the automobile is equal to or greater than the predetermined amount and when the amount of the torque acting on the drive shaft of the compressor is smaller than the first predetermined amount; the third control unit operating the transmitting means so as not to transmit the power for moving the automobile to the compressor both when the amount of demand for acceleration of the automobile is equal to or greater than the predetermined amount and when the amount of the torque acting on the drive shaft of the compressor is greater than the second predetermined amount; the third control unit further operating the variable displacement mechanism so as to forcibly reduce the capacity of the compressor to the minimum value thereof both when the amount of demand for acceleration of the automobile is equal to or greater than the predetermined amount and when the amount of the torque acting on the drive shaft of the compressor is equal to or greater than the first predetermined amount but is equal to or smaller than the second predetermined amount.

According to a second aspect of the present invention an automotive air conditioning system including a compressor with a variable displacement mechanism, an evaporator forming a part of the automotive air conditioning system, controlling means for controlling operation of the compressor, and a transmitting means for intermittently transmitting power for moving an automobile to the compressor, the controlling means including a sensor for sensing a heat load on the evaporator; a switching device for sensing an amount of demand for acceleration of the automobile; a second sensor for detecting the temperature of air outside the automobile; second control unit for judging whether the amount of demand for acceleration of the automobile is equal to or greater than a predetermined amount, and for judging whether the temperature of air outside the automobile is smaller than a first predetermined amount, greater than a second predetermined amount which is greater than the first predetermined amount, or equal to or greater than the first predetermined amount but equal to or smaller than the second predetermined amount; a third control unit for selectively operating the transmitting means and the variable displacement mechanism in response to a judgement of the second control unit, the third control unit operating the variable displacement mechanism so as to vary a capacity of the compressor from the minimum to the maximum value thereof in response to changes in the heat load on the evaporator when the amount of demand for acceleration of the automobile is smaller than the predetermined amount, or both when the amount of demand for acceleration of the automobile is equal to or greater than the predetermined amount and when the temperature of air outside the automobile is smaller than the first predetermined amount; the third control unit operating the transmitting means so as not to transmit the power for moving the automobile to the compressor both when the amount of demand for acceleration of the automobile is equal to or greater than the predetermined amount and when the temperature of air outside the automobile is greater than the second predetermined amount; the third operating unit further operating the variable displacement mechanism so as to forcibly reduce the capacity of the compressor to the minimum value thereof both when the amount of demand for acceleration of the automobile is equal to or greater than the predetermined amount and when the temperature of air outside the automobile is equal to or greater than the first predetermined amount but is equal to or smaller than the second predetermined amount.

In the accompanying drawings:

Figure 1 is a graph illustrating a manner of compensation for a reduction of the accelerating performance of an automobile in accordance with one prior art example of an automobile air conditioning system.

Figure 2 is a partial schematic block diagram of an automotive air conditioning system in accordance with a first embodiment of the present invention.

Figure 3 is a graph illustrating relationships which are obtained by an operational manner of a compressor used in the automotive air conditioning system shown in Figure 2.

Figure 4 is a flow chart of an operational manner of a control apparatus used in the automotive air conditioning system shown in Figure 2.

Figure 5 is a time chart of an operational manner of a control apparatus used in the automotive air conditioning system shown in Figure 2.

Figure 6 is a partial schematic block diagram of an automotive air conditioning system in accordance with a second embodiment of the present invention.

Figure 7 a graph illustrating a relationship obtained by an operational manner of the compressor used in the automotive air conditioning systems shown in Figures 2 and 6.

Figure 8 is a flow chart of an operational manner of a control apparatus used in the automotive air conditioning system shown in Figure 6.

Figure 9 is a time chart of an operational manner of a control apparatus used in the automotive air conditioning system shown in Figure 6.

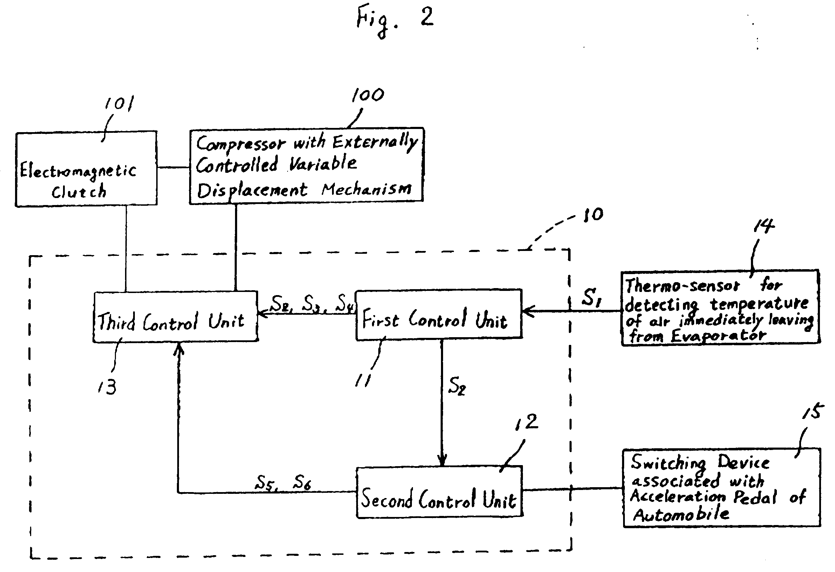

Figure 2 illustrates a partial schematic block diagram of an automotive air conditioning system in accordance with a first embodiment of the present invention. With reference to Figure 2, the automotive air conditioning system includes refrigerant compressor 100 having a variable displacement mechanism which has already disclosed in EP-A1-486257, and control apparatus 10 which controls operation of compressor 100. As disclosed in EP-A1-486257, the variable displacement mechanism of compressor 100 comprises an externally controlled valve device having a solenoid coil. The variable displacement mechanism of compressor 100 has already described in detail in EP-A1-486257 so that a further explanation thereof is omitted.

Control apparatus 10 includes first, second and third control units 11, 12 and 13. Thermo-sensor 14 detects temperature T of air immediately leaving from an evaporator (not shown) which forms a part of the automotive air conditioning system, and is-connected to first control unit 11 through a wire. First control unit 11 is connected to both second and third control units 12 and 13 through the respective wires. Second control unit 12 is connected to third control unit 13 through a wire. Third control unit 13 is connected to the solenoid coil of the externally controlled valve device of the variable displacement mechanism of compressor 100 through a wire. Third control unit 13 is further connected through another wire to an electromagnetic coil of electromagnetic clutch 101 which is associated with compressor 100 so as to intermittently transmit the rotational motion of an external power source, such as an automobile engine to a drive shaft of compressor 100.

Thermo-sensor 14 generates first control signal S1 which represents temperature T of air immediately leaving from the evaporator. First control signal S1 is sent to first control unit 11 from thermo-sensor 14 through the wire so as to be processed therein as follows.

First control unit 11 operates as a proportional-plus-integral controller so as to generate a proportional-plus-integral control signal as second control signal S2 which will be described in detail later. Second control signal S2 is sent-to both second and third control units 12 and 13 from first control unit 11 through the respective wires.

Third control unit 13 operates to process second control signal S2 so as to output electric current I, of which value varies from Imin (0 ampere) to Imax (1.0 ampere) in response to changes in value of second control signal S2, to the solenoid coil of the externally controlled valve device of the variable displacement mechanism.

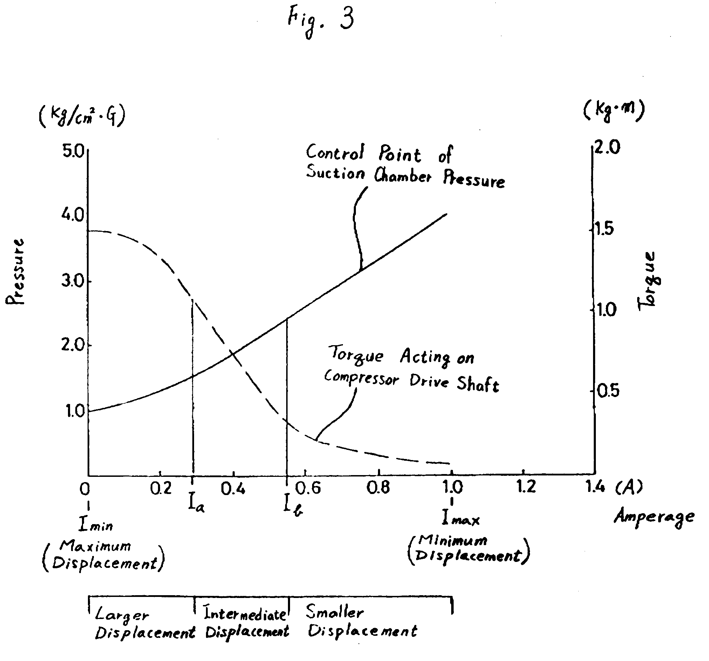

With reference to Figure 3 illustrating relationships which are obtained by an operational manner of compressor 100, when the externally controlled valve device of the variable displacement mechanism receives electric current I of which value is Imax, the control point of pressure in the compressor suction chamber is maintained at the maximum value so that the compressor operates with the minimum displacement. Therefore, the torque which acts on the compressor drive shaft is maintained at the minimum value. On the other hand, when the externally controlled valve device of the variable displacement mechanism receives electric current I of which value is Imin, the control point of pressure in the compressor suction chamber is maintained at the minimum value so that the compressor operates with the maximum displacement. Therefore, the torque which acts on the compressor drive shaft is maintained at the maximum value. Furthermore, the control point of pressure in the compressor suction chamber varies from the maximum to minimum value thereof in response to the changes in electric current I as indicated by a solid line in Figure 3. The torque acting on the compressor drive shaft varies from the maximum to minimum value thereof in response to changes in electric current I as indicated by a dashed line in figure 3. Accordingly the capacity of compressor 100 can be controlled by changing the value of electric current I so that temperature T of air immediately leaving from the evaporator is maintained at the set temperature Tset.

First control unit 11 further operates as follow. When temperature T of air immediately leaving from the evaporator falls to or below a first predetermined value Ta at which a frost is begun to form at an exterior surface of the evaporator, first control signal S1 is processed in first control unit 11 to generate third control signal S3, which is sent to third control unit 13 to be processed therein so as to deenergize the electromagnetic coil of electromagnetic clutch 101. Therefore, operation of compressor 100 is stopped in order to prevent frost forming at the exterior surface of the evaporator. Once third control signal S3 is generated in first control unit 11, deenergization of the electromagnetic coil of electromagnetic clutch 101 is maintained until temperature T of air immediately leaving from the evaporator rises to or above second predetermined value Tb which is greater than first predetermined value Ta. When temperature T of air immediately leaving from the evaporator rises above second predetermined value Tb, first control signal S1 is processed in first control unit 11 to generate fourth control signal S4, which is sent to third control unit 13 to be processed therein so as to energize the electromagnetic coil of electromagnetic clutch 101. Therefore, operation of compressor 100 is restarted. Accordingly, the electromagnetic coil of electromagnetic clutch 101 is energized and deenergized by the respective third and fourth control signals S4 and S3 generated at third control unit 13. That is, the operation of compressor 100 is stopped and restarted by the respective third and fourth control signals S3 and S4 generated at third control unit 13.

Switching device 15 is associated with an acceleration pedal of an automobile, and is connected to second control unit 12 through a wire. Switching device 15 is turned on so as to start operation of second control unit 12 when the amount of demand for acceleration of an automobile is equal to or greater than one certain value, that is, when the stepping amount of the acceleration pedal is equal to or greater than one certain stepping amount. On the other hand, switching device 15 is turned off so as to stop operation of second control unit 12 when the amount of demand for acceleration of the automobile is less than the above-mentioned one certain value, that is, when the stepping amount of the acceleration pedal is less than the above-mentioned one certain stepping amount. Accordingly, second control unit 12 operates only when the amount of demand for acceleration of the automobile is equal to or greater than one certain value. Furthermore, operation of second control unit 12 overrides operation of first control unit 11. Furthermore, switching device 15 can be a pressure switch associated with an intake-manifold used for the automobile engine, or a switching device associated with a throttling device used for the automobile engine.

Second control unit 12 operates to judge whether compressor 100 operates with a larger, an intermediate or a smaller displacement by means of processing second control signal S2 therein.

With reference to Figure 3 again, operation of second control unit 12 is as follows. When second control unit 12 judges that compressor 100 operates with the larger displacement, i.e., the solenoid coil of the externally controlled valve device of the variable displacement mechanism receives electric current I of which value is equal to or greater than Imin but is smaller than one predetermined value Ia, second control unit 12 generates fifth control signal S5. Fifth control signal S5 is sent to third control unit 13 from second control unit 12, and is processed therein so as to deenergize the electromagnetic coil of electromagnetic clutch 101. When second control unit 12 judges that compressor 100 operates with the intermediate displacement, i.e., the solenoid coil of the externally controlled valve device of the variable displacement mechanism receives electric current I of which value is equal to or greater than one predetermined value Ia but is equal to or smaller than another predetermined value Ib which is greater than one predetermined value Ia, second control unit 12 generates sixth control signal S6. Sixth control signal S6 is sent to third control unit 13 from second control unit 12, and is processed therein so as to output electric current I of which value is Imax to the solenoid coil of the externally controlled valve device of the variable displacement mechanism. Therefore, the capacity of compressor 100 is forcibly reduced to the minimum displacement. When second control unit 12 judges that compressor 100 operates with the smaller displacement, i.e., the solenoid coil of the externally controlled valve device of the variable displacement mechanism receives electric current I of which value is greater than another predetermined value Ib but is equal to or smaller than Imax, second control unit 12 generates no control signal. Therefore, the operation of control apparatus 10 is substantially left to only operation of first control unit 11.

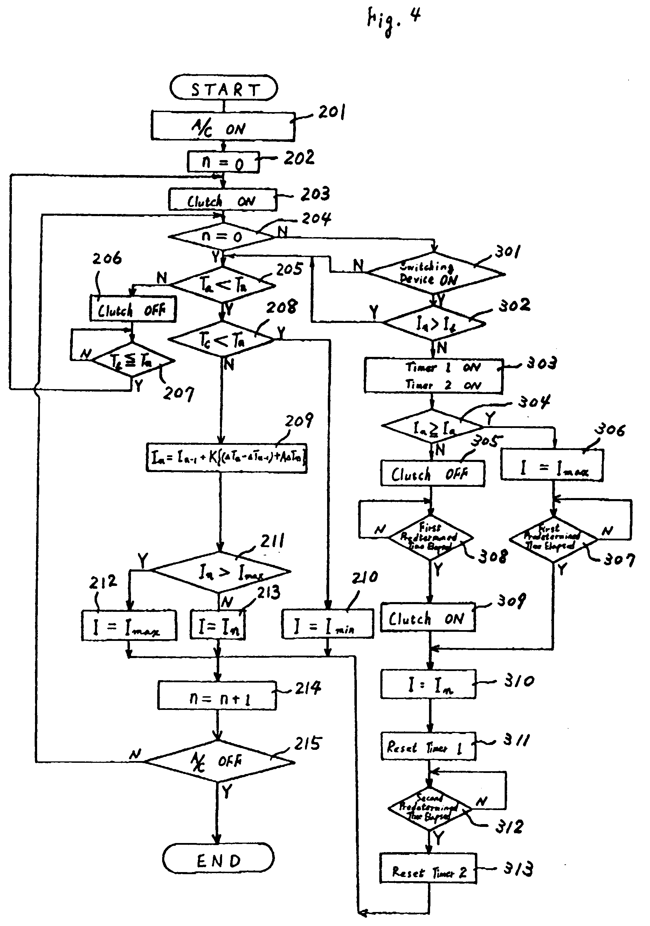

With reference to Figure 4 in addition to Figures 2 and 3, an operational manner of control apparatus 10 is described in detail below. In Figure 4, symbol "n" and appended symbol "n" indicate the number of times of the operation of control apparatus 10 after the automotive air conditioning system is turned on.

When the automotive air conditioning system is turned on at step 201, a counter (not shown) which is associated with control apparatus 10 is reset at step 202, and the electromagnetic coil of electromagnetic clutch 101 is energized at step 203 sequentially. Step 203 sequentially proceeds to step 204, at which whether the number of the counter is zero is judged. If the number of the counter is zero, that is, if the first operation of control apparatus 10 is not completed after the automotive air conditioning system is turned on, step 204 proceeds to step 205. On the other hand, if the number of the counter is not zero, that is, if at least first operation of control apparatus 10 has been completed after the automotive air conditioning system is turned on, step 204 proceeds to step 301.

At step 205, whether temperature Tn of air immediately leaving from the evaporator is higher than first predetermined value Ta is judged. If temperature Tn is higher than Ta, step 205 proceeds to step 208. On the other hand, if temperature Tn is equal to or below Ta, step 205 proceeds to step 206. It step 206, the electromagnetic coil of electromagnetic clutch 101 is deenergized in order to avoid frost forming at the-exterior surface of the evaporator, and step 206 sequentially proceeds to step 207. At step 207, whether temperature Tn is equal to or higher than second predetermined value Tb is judged. If temperature Tn is equal to or higher than Tb, step 207 proceeds to step 203. On the other hand, if temperature Tn is below Tb, the deenergization of the electromagnetic coil of electromagnetic coil 101 is maintained.

At step 208, whether temperature Tn of air immediately leaving from the evaporator is higher than third predetermined value Tc is judged. If temperature Tn is higher than Tc, step 208 proceeds to step 210. On the other hand, if temperature Tn is equal to or below Tc, step 208 proceeds to step 209. At step 209, second control signal S2 which is shown by, for convenience, a form of electric current I which is outputted from third control unit 13 to the solenoid coil of the externally controlled valve device of the variable displacement mechanism is generated in accordance with the following formula.

$$In = In\text{-}1 + K\{(\Delta Tn - \Delta Tn\text{-}1) + A \cdot \Delta Tn\} \qquad (1)$$

In formula (1), ΔTn is (Tn - Tset), and K and A are the different constant values, respectively. Furthermore, in the first operation of control apparatus 10, Imin and (Tc - Tset) are substituted for In-1 and ΔTn-1 in formula (1), respectively. Step 209 sequentially proceeds to step 211 in which whether electric current In is greater than Imax is judged. If electric current In is greater than electric current Imax, step 211 proceeds to step 212. On the other hand, if electric current In is equal to or smaller than electric current Imax, step 211 proceeds to step 213. At step 212, electric current Imax is outputted from third control unit 13 to the solenoid coil of the externally controlled valve device of the variable displacement mechanism. At step 213, electric current In is outputted from third control unit 13 to the solenoid coil of the externally controlled valve device of the variable displacement mechanism. At step 210, electric current Imin is outputted from third control unit 13 to the solenoid coil of the externally controlled valve device of the variable displacement mechanism.

At step 301 whether switching device 15 is turned on is judged. If switching device 15 is turned on, step 301 proceeds to step 302. On the other hand, if switching device 15 is not turned on, step 301 proceeds to step 205. At step 302, whether electric current In is greater than second predetermined value Ib is judged. If electric current In is greater than second predetermined value Ib, step 302 also proceeds to step 205. On the other hand, if electric current In is equal to or smaller than second predetermined value Ib, step 302 proceeds to step 303. At step 303, a first and second timers start to run. Sequentially, step 303 proceeds to step 304 at which whether electric current In is greater than first predetermined value Ia is Judged. If electric current In is equal to or greater than first predetermined value Ia, step 304 proceeds to step 306. On the other hand, if electric current In is smaller than first predetermined value Ia, step 304 proceeds to step 305. At step 306, electric current Imax is outputted from third control unit 13 to the solenoid coil of the externally controlled valve device of the variable displacement mechanism. Step 306 sequentially proceeds to step 307 at which whether the first timer runs a first predetermined time t1 is judged. If the first timer does not run the first predetermined time t1, electric current Imax is still outputted from third control unit 13 to the solenoid coil of the externally controlled valve device of the variable displacement mechanism. On the other hand, if the first timer runs the first predetermined time t1, step 307 proceeds to step 310.

At step 305, the electromagnetic coil of electromagnetic clutch 101 is deenergized. Step 305 sequentially proceeds to step 308 at which whether the first timer runs first predetermined time t1 is judged. If the first timer does not run the first predetermined time t1, deenergization of the electromagnetic coil of electromagnetic clutch 101 is maintained. On the other hand, if the first timer runs the first predetermined time t1, step 308 proceeds to step 309 at which the electromagnetic coil of electromagnetic clutch 101 is energized again. Step 309 sequentially proceeds to step 310 at which electric current In is outputted from third control unit 13 to the solenoid coil of the externally controlled valve device of the variable displacement mechanism. Step 310 sequentially proceeds to step 311 at which the first timer is reset. Step 311 sequentially proceeds to step 312 at which whether the second timer runs a second predetermined time t2 which Is longer than the first predetermined time t1 is judged. If the second timer does not run the second predetermined time t2, electric current In is still outputted from third control unit 13 to the solenoid coil of the externally controlled valve device of the variable displacement mechanism. On the other hand, if the second timer runs the second predetermined time t2, step 312 proceeds to step 313 at which the second timer in reset. The respective steps 212, 213, 210 and 313 proceeds to step 214 at which the number of counter is increased by one as the operation of control apparatus 10 is completed once. Step 214 sequentially proceeds to step 215 at which the automotive air conditioning system is required to be turned off is judged. If the automotive air conditioning system is required to be turned off, the automotive air conditioning system is turned off so that the operation thereof is terminated. On the other hand, if the automotive air conditioning system is not required to be turned off, step 215 returns to step 204 so that the operation of control apparatus 10 is repeated.

As described above, each of the steps from step 205 to the respective steps 212, 213 and 210 is carried out in accordance with the operation of first control unit 11. Furthermore, each of the steps from step 302 to step 313 is carried out in accordance with the operation of second control unit 12.

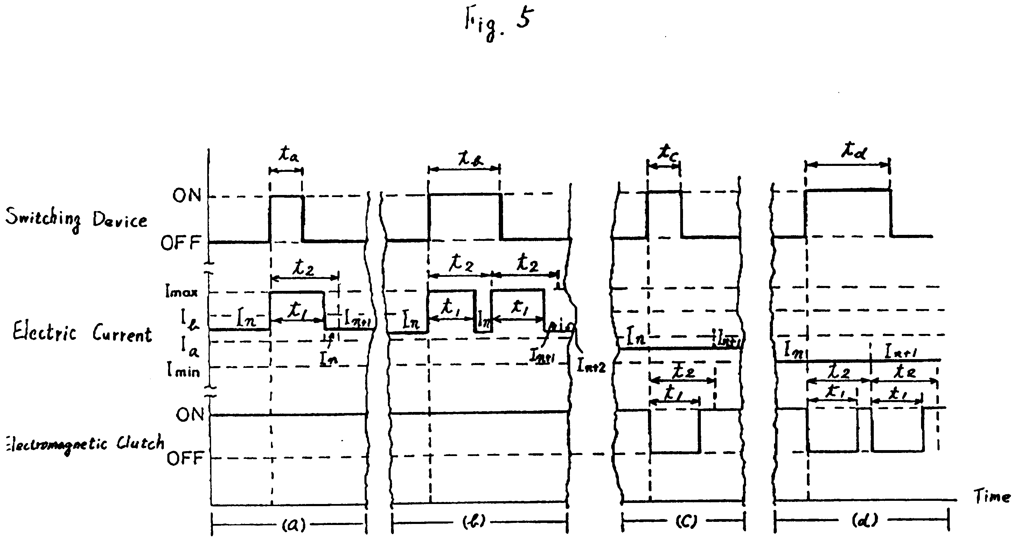

Figure 5 is a time chart illustrating the different operational stages of control apparatus 10. With reference to Figure 5 in addition to Figure 4, each of the steps from step 302 to step 313 via steps 306 and 307 in Figure 4 is carried out in stages (a) and (b). The difference between stage (a) with (b) is the length of ON-time of switching device 15. In stage (a), the length ta of ON-time of switching device 15 is shorter than second predetermined time t2. Therefore, each of the steps from step 302 to step 313 via steps 306 and 307 in Figure 4 is carried out only once in stage (a). On the other hand, in stage (b), the length tb of ON-time of switching device 15 is slightly longer than second predetermined time t2. Therefore, each of the steps from step 302 to step 313 via steps 306 and 307 in Figure 4 is carried out twice in stage (b).

Furthermore, each of the steps from step 302 to step 313 via steps 305, 308 and 309 in Figure 4 is carried out in stages (c) and (d). The difference between stage (c) with (d) is the length of ON-time of switching device 15. In stage (c), the length tc of ON-time of switching device 15 is shorter than second predetermined time t2. Therefore, each of the steps from step 302 to step 313 via steps 305, 308 and 309 in Figure 4 is carried out only once in stage (c). On the other hand, in stage (d), the length td of ON-time of switching device 15 is slightly longer than second predetermined time t2. Therefore, each of the steps from step 302 to step 313 via steps 305, 308 and 309 in Figure 4 is carried out twice in stage (d).

As described above, the automotive air conditioning system according to the first embodiment of the present invention can quickly and adequately compensate a reduction of the accelerating performance of the automobile without sacrificing an adequate air conditioning in the automobile passenger compartment during operation of the automotive air conditioning system.

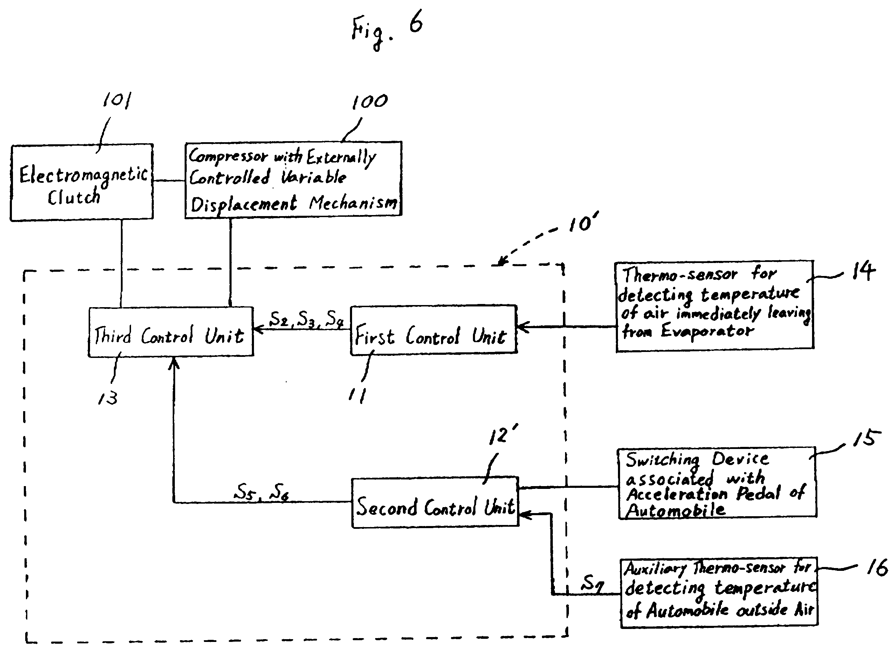

Figure 6 illustrates a partial schematic block diagram of an automotive air conditioning system in accordance with a second embodiment of the present invention. In Figure 6, the same numerals are used to denote the corresponding elements shown in Figure 2 so that an explanation thereof is omitted. In the second embodiment, control apparatus 10′ includes second control unit 12′ which is connected to both switching device 15 and auxiliary thermo-sensor 16 through the respective wires. Auxiliary thermo-sensor 16 detects temperature Ts of an automobile outside air, and generates seventh control signal S7 which represents temperature Ts of the automobile outside air. Seventh control signal S7 is sent to second control unit 12′ from auxiliary thermo-sensor 16 through the wire so as to be processed therein.

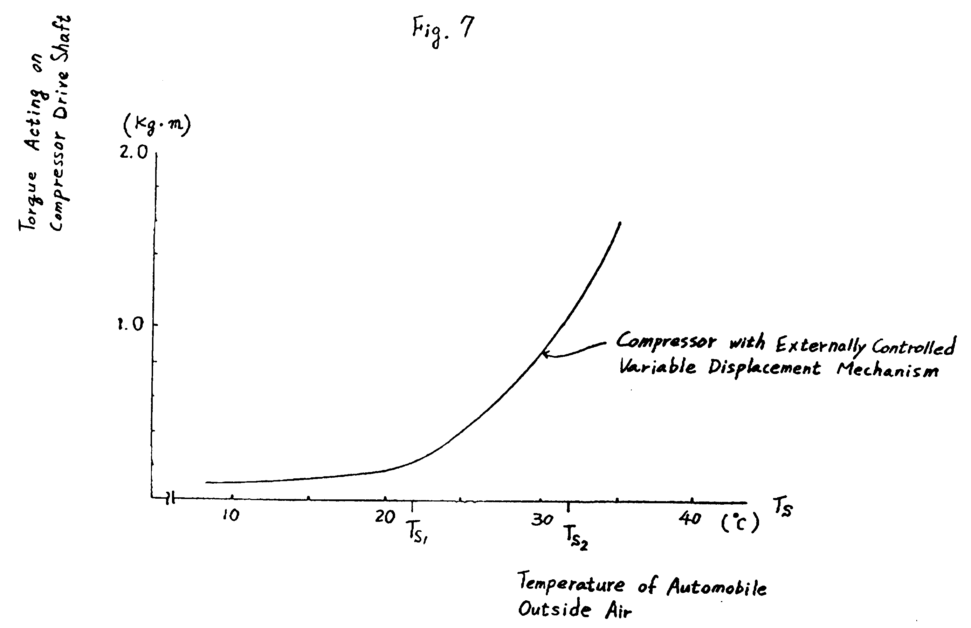

In the second embodiment, a relationship which is obtained by an operational manner of compressor 100 and is illustrated in Figure 7 is utilized in the operation of control apparatus 10′. As illustrated in Figure 7, when temperature Ts of an automobile outside air is lower than first predetermined value Ts1, an amount of the torque acting on the compressor drive shaft is small. On the other hand, when temperature Ts of the automobile outside air is higher than second predetermined value Ts2, the amount of the torque acting on the compressor drive shaft is large. Furthermore, when temperature Ts of the automobile outside air is equal to or higher than first predetermined value Ts1 but is equal to or lower than second predetermined value Ts2, the amount of the torque acting on the compressor drive shaft is medium.

Second control unit 12′ operates to judge whether temperature Ts of the automobile outside air is lower than first predetermined value Ts1, equal to or higher than first predetermined value Ts1 but equal to or lower than second predetermined value Ts2, or higher than second predetermined value Ts2 by means of processing seventh control signal S7 therein.

With reference to figure 7 again, operation of second control unit 12′ is as follows. When second control unit 12′ judges that temperature Tb of the automobile outside air is lower than first predetermined value Ts1, second control unit 12′ generates no control signal. Therefore, the operation of control apparatus 10′ is substantially left to only operation of first control unit 11. When second control unit 12′ judges that temperature Ts of the automobile outside air is higher than second predetermined value Ts2, second control unit 12′ generates fifth control signal S5. Fifth control signal S5 is sent to third control unit 13 from second control unit 12′, and is processed therein so as to deenergize the electromagnetic coil of electromagnetic clutch 101. When second control unit 12′ judges that temperature Ts of the automobile outside air is equal to or higher than first predetermined value Ts1 but is equal to or lower than second predetermined value Ts2, second control unit 12′ generates sixth control signal S6. Sixth control signal S6 is sent to third control unit 13 from second control unit 12′, and is processed therein so as to output electric current I of which value is Imax to the solenoid coil of the externally controlled valve device of the variable displacement mechanism.

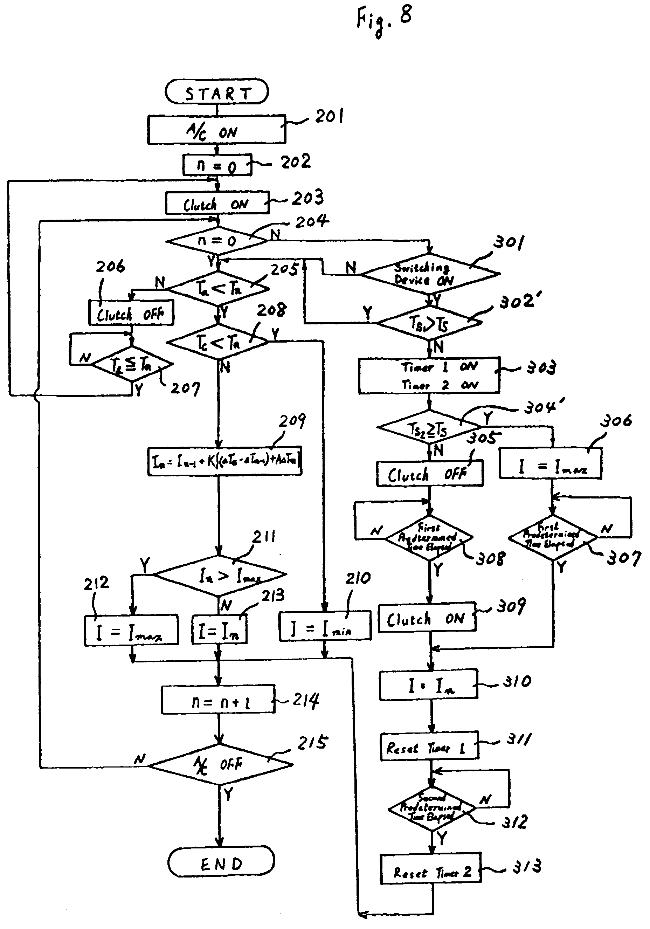

Figure 8 is a flow chart illustrating an operational manner of control apparatus 10′. Only difference between Figure 8 and Figure 4 which is the flow chart illustrating the operational manner of control apparatus 10 of the first embodiment is that steps 302 and 304 in Figure 4 are replaced with steps 302′ and 304′ in Figure 8, respectively. At step 302′ in Figure 8, whether temperature Ts of the automobile outside air is lower than first predetermined value Ts1 is judged. At step 304′ in Figure 8, whether temperature Ts of the automobile outside air is equal to or lower than second predetermined value Ts2 is judged.

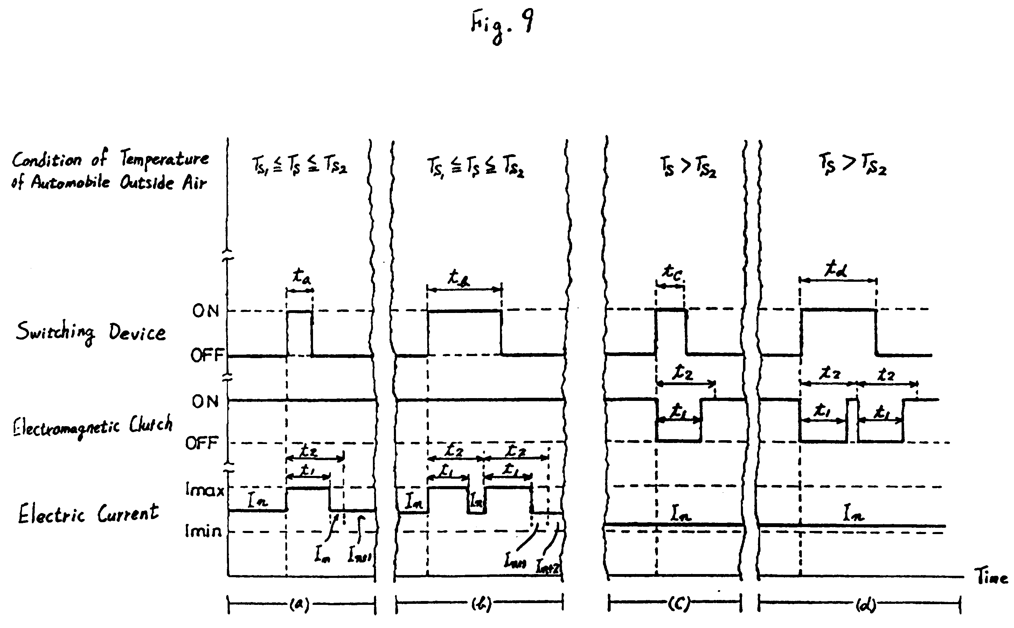

Figure 9 is a time chart illustrating the different operational stages of control apparatus 10′. With reference to Figure 9 in addition to Figure 8, each of the steps from step 302′ to step 313 via steps 306 and 307 in Figure 8 is carried out in stages (a) and (b). The difference between stage (a) with (b) is the length of On-time of switching device 15. In stage (a), the length ta of ON-time of switching device 15 is shorter than second predetermined time t2. Therefore, each of the steps from step 302′ to step 313 via steps 306 and 307 in Figure 8 is carried out only once in stage (a). On the other hand, in stage (b), the length tb of ON-time of switching device 15 is slightly longer than second predetermined time t2. Therefore, each of the steps from step 302′ to step 313 via steps 306 and 307 in Figure 8 is carried out twice in stage (b).

Furthermore, each of the steps from step 302′ to step 313 via steps 305, 308 and 309 in Figure 8 is carried out in stages (c) and (d). The difference between stage (c) with (d) is the length of ON-time of switching device 15. In stage (c), the length tc of ON-time of switching device 15 is shorter than second predetermined time t2. Therefore, each of the steps from step 302′ to step 313 via steps 305, 308 and 309 in Figure 8 is carried out only once in stage (c). On the other hand, in stage (d), the length td of ON-time of switching device 15 is slightly longer than second predetermined time t2. Therefore, each of the steps from step 302′ to step 313 via steps 305, 308 and 309 in Figure 8 is carried out twice in stage (d).

The effect of the second embodiment is similar to the effect of the first embodiment so that an explanation thereof is omitted.

## Claims

1. An automotive air conditioning system including a compressor (100) with a variable displacement mechanism, an evaporator forming a part of the automotive air conditioning system, controlling means for controlling operation of the compressor, and a transmitting means (101) for intermittently transmitting power for moving an automobile to the compressor, the controlling means including a sensor (14) for sensing a heat load on the evaporator; a switching device (15) for sensing an amount of demand for acceleration of the automobile; first control unit (11) for determining an amount of torque acting on a drive shaft of the compressor; a second control unit (12) for judging whether the amount of demand for acceleration of the automobile is equal to or greater than a predetermined amount, and for judging whether the amount of the torque acting on the drive shaft of the compressor is smaller than a first predetermined amount, greater than a second predetermined amount which is greater than the first predetermined amount, or equal to or greater than the first predetermined amount but equal to or smaller than the second predetermined amount; a third control unit (13) for selectively operating the transmitting means (101) and the variable displacement mechanism in response to a judgement of the second control unit, the third control unit (13) operating the variable displacement mechanism so as to vary a capacity of the compressor (100) from the minimum to the maximum value thereof in response to changes in the heat load on the evaporator when the amount of demand for acceleration of the automobile is smaller than the predetermined amount, or both when the amount of demand for acceleration of the automobile is equal to or greater than the predetermined amount and when the amount of the torque acting on the drive shaft of the compressor is smaller than the first predetermined amount; the third control unit (13) operating the transmitting means so as not to transmit the power for moving the automobile to the compressor (100) both when the amount of demand for acceleration of the automobile is equal to or greater than the predetermined amount and when the amount of the torque acting on the drive shaft of the compressor is greater than the second predetermined amount; the third control unit (13) further operating the variable displacement mechanism so as to forcibly reduce the capacity of the compressor (100) to the minimum value thereof both when the amount of demand for acceleration of the automobile is equal to or greater than the predetermined amount and when the amount of the torque acting on the drive shaft of the compressor is equal to or greater than the first predetermined amount but is equal to or smaller than the second predetermined amount.

2. An automotive air conditioning system according to claim 1, wherein the sensor is a thermo-sensor (14) for detecting temperature of air immediately leaving from the evaporator.

3. An automotive air conditioning system according to claim 2, wherein the first control unit (11) determines from the temperature detected by the thermo-sensor (14) the amount of torque acting on the drive shaft of the compressor (100).

4. An automotive air conditioning system according to any one of the preceding claims, wherein the automobile includes an engine from which the power for moving the automobile is derived.

5. An automotive air conditioning system according to claim 4, wherein the switching device (15) is an acceleration pedal used for the engine.

6. An automotive air conditioning system according to claim 4 or claim 5, wherein the second control unit (12) is associated with the acceleration pedal used for the engine.

7. An automotive air conditioning system according to claim 4 or claim 5, wherein the switching device is a pressure switch associated with an intake-manifold used for the engine.

8. An automotive air conditioning system according to claim 4 or claim 5, wherein the switching device is a switching device associated with a throttling device used for the engine.

9. An automotive air conditioning system according to any one of the preceding claims, wherein the transmitting means is an electromagnetic clutch (101).

10. An automotive air conditioning system according to claim 9, wherein the electromagnetic clutch (101) includes an electro-magnetic coil.

11. An automotive air conditioning system according to any one of the preceding claims, wherein the variable displacement mechanism includes an externally controlled valve device having a solenoid coil.

12. An automotive air conditioning system including a compressor (100) with a variable displacement mechanism, an evaporator forming a part of the automotive air conditioning system, controlling means for controlling operation of the compressor, and a transmitting means (101) for intermittently transmitting power for moving an automobile to the compressor, the controlling means including a sensor (14) for sensing a heat load on the evaporator; a switching device (15) for sensing an amount of demand for acceleration of the automobile; a second sensor (16) for detecting the temperature of air outside the automobile; second control unit (12') for judging whether the amount of demand for acceleration of the automobile is equal to or greater than a predetermined amount, and for judging whether the temperature of air outside the automobile is smaller than a first predetermined amount, greater than a second predetermined amount which is greater than the first predetermined amount, or equal to or greater than the first predetermined amount but equal to or smaller than the second predetermined amount; a third control unit (13) for selectively operating the transmitting means (101) and the variable displacement mechanism in response to a judgement of the second control unit, the third control unit (13) operating the variable displacement mechanism so as to vary a capacity of the compressor (100) from the minimum to the maximum value thereof in response to changes in the heat load on the evaporator when the amount of demand for acceleration of the automobile is smaller than the predetermined amount, or both when the amount of demand for acceleration of the automobile is equal to or greater than the predetermined amount and when the temperature of air outside the automobile is smaller than the first predetermined amount; the third control unit (13) operating the transmitting means so as not to transmit the power for moving the automobile to the compressor (100) both when the amount of demand for acceleration of the automobile is equal to or greater than the predetermined amount and when the temperature of air outside the automobile is greater than the second predetermined amount; the third operating unit (13) further operating the variable displacement mechanism so as to forcibly reduce the capacity of the compressor (100) to the minimum value thereof both when the amount of demand for acceleration of the automobile is equal to or greater than the predetermined amount and when the temperature of air outside the automobile is equal to or greater than the first predetermined amount but is equal to or smaller than the second predetermined amount.

## Patentansprüche

1. Kraftfahrzeugklimaanlage mit einem Kompressor (100) mit einem variablen Verdrängungsmechanismus, einem Verdampfer, der einen Teil der Kraftfahrzeugklimaanlage bildet, einem Steuermittel zum Steuern des Betriebes des Kompressors und einem Übertragungsmittel (101) zum unterbrochenen Übertragen von Leistung zum Bewegen eines Kraftfahrzeuges zu dem Kompressor, wobei das Steuermittel einen Sensor (14) zum Erfassen einer Wärmebelastung auf den Verdampfer aufweist;
einer Schaltvorrichtung (15) zum Erfassen eines Betrages der Anforderung für die Beschleunigung des Kraftfahrzeuges;
einer ersten Steuereinheit (11) zum Bestimmen des Betrages des Drehmomentes, das auf eine Antriebswelle des Kompressors wirkt;
einer zweiten Steuereinheit (12) zum Beurteilen, ob der Betrag für die Anforderung für die Beschleunigung des Kraftfahrzeuges gleich oder größer als ein vorbestimmter Betrag ist, und zum Beurteilen, ob der Betrag des Drehmomentes, das auf die Antriebswelle des Kompressors wirkt, kleiner als ein erster vorbestimmter Betrag, größer als ein zweiter vorbestimmter Betrag, der größer als der erste vorbestimmte Betrag ist, oder gleich oder größer als der erste vorbestimmte Betrag, aber gleich oder kleiner als zweite vorbestimmte Betrag ist;
einer dritten Steuereinheit (13) zum selektiven Betreiben des Übertragungsmittels (110) und des variablen Verdrängungsmechanismus als Reaktion auf eine Beurteilung der zweiten Steuereinheit, wobei die dritte Steuereinheit (13) den variablen Verdrängungsmechanismus so betreibt, daß eine Kapazität des Kompressors (100) von einem minimalen zu einem maximalen Wert davon variiert wird als Reaktion auf Änderungen der Wärmebelastung auf den Verdampfer, wenn der Betrag der Anforderung für die Beschleunigung des Kraftfahrzeuges kleiner als der vorbestimmte Betrag ist, oder wenn sowohl der Betrag der Anforderung für die Beschleunigung des Kraftfahrzeuges gleich oder größer als der vorbestimmte Betrag ist als auch der Betrag des Drehmomentes, das auf die Antriebswelle des Kompressors wirkt, kleiner als der erste vorbestimmte Betrag ist;
wobei die dritte Steuereinheit (13) das Übertragungsmittel so betreibt, daß es die Leistung für die Bewegung des Kraftfahrzeuges nicht zu den Kompressor (100) überträgt, wenn sowohl der Betrag der Anforderung für die Beschleunigung des Kraftfahrzeuges gleich oder größer als der vorbestimmte Betrag ist als auch der Betrag des Drehmomentes, das auf die Antriebswelle des Kompressors wirkt, größer als der zweite vorbestimmte Betrag ist;
wobei die dritte Steuereinheit (13) weiter den variablen Verdrängungsmechanismus so betreibt, daß zwangsweise die Kapazität des Kompressors (100) auf seinen minimalen Wert verringert wird, wenn sowohl der Betrag der Anforderung für die Beschleunigung des Kraftfahrzeuges gleich oder größer als der vorbestimmte Betrag ist, als auch der Betrag des Drehmomentes, das auf die Antriebswelle des Kompressors wirkt, gleich oder größer als der erste vorbestimmte Betrag ist, aber gleich oder kleiner als der zweite vorbestimmte Betrag ist.

2. Kraftfahrzeugklimaanlage nach Anspruch 1, bei der der Sensor ein Thermosensor (14) zum Erfassen der Temperatur ist, die unmittelbar den Verdampfer verläßt.

3. Kraftfahrzeugklimaanlage nach Anspruch 2, bei der die erste Steuereinheit (11) aus der von dem Thermosensor (14) erfaßten Temperatur den Betrag des Drehmomentes bestimmt, das auf die Antriebswelle des Kompressors (100) wirkt.

4. Kraftfahrzeugklimaanlage nach einem der vorhergehenden Ansprüche, bei der das Kraftfahrzeug einen Motor aufweist, von dem die Leistung zum Bewegen des Kraftfahrzeuges abgeleitet wird.

5. Kraftfahrzeugklimaanlage nach Anspruch 4, bei der die Schaltvorrichtung (15) ein für den Motor benutztes Gaspedal ist.

6. Kraftfahrzeugklimaanlage nach Anspruch 4 oder Anspruch 5, bei der die zweite Steuereinheit (12) mit dem für den Motor benutzten Gaspedal verknüpft ist.

7. Kraftfahrzeugklimaanlage nach Anspruch 4 oder Anspruch 5, bei der die Schaltvorrichtung ein Druckschalter ist, der mit einer für den Motor benutzten Ansaugleitung verknüpft ist.

8. Kraftfahrzeugklimaanlage nach Anspruch 4 oder Anspruch 5, bei der die Schaltvorrichtung eine Schaltvorrichtung ist, die mit einer mit dem Motor benutzten Drosselvorrichtung verknüpft ist.

9. Kraftfahrzeugklimaanlage nach einem der vorhergehenden Ansprüche, bei der das Übertragungsmittel eine elektromagnetische Kupplung (101) ist.

10. Kraftfahrzeugklimaanlage nach Anspruch 9, bei der die elektromagnetische Kupplung (101) eine elektromagnetische Spule aufweist.

11. Kraftfahrzeugklimaanlage nach einem der vorhergehenden Ansprüche, bei der der variable Verdrängungsmechanismus eine extern gesteuerte Ventilvorrichtung mit einer Solenoidspule aufweist.

12. Kraftfahrzeugklimaanlage mit einem Kompressor (100) mit einem variablen Verdrängungsmechanismus, einem Verdampfer, der als ein Teil der Kraftfahrzeugklimaanlage gebildet ist, einem Steuermittel zum Steuern des Betriebes des Kompressors und einem Übertragungsmittel (101) zum unterbrochenen Übertragen von Leistung zur Bewegung eines Kraftfahrzeuges zu dem Kompressor, wobei das Steuermittel einen Sensor (14) zum Erfassen einer Wärmebelastung auf den Verdampfer aufweist;
einer Schaltvorrichtung (15) zum Erfassen eines Betrages der Anforderung für die Beschleunigung des Kraftfahrzeuges;
einem zweiten Sensor (16) zum Erfassen der Temperatur der Luft außerhalb des Kraftfahrzeuges;
einer zweiten Steuereinheit (12') zum Beurteilen, ob der Betrag der Anforderung für die Beschleunigung des Kraftfahrzeuges gleich oder größer als ein vorbestimmter Betrag ist, und zum Beurteilen, ob die Temperatur der Luft außerhalb des Kraftfahrzeuges kleiner als ein erster vorbestimmter Betrag, größer als ein zweiter vorbestimmter Betrag, der größer als der erste vorbestimmte Betrag ist, oder gleich oder größer als der erste yorbestimmte Betrag, aber gleich oder kleiner als der zweite vorbestimmte Betrag ist;
einer dritten Steuereinheit (12) zum selektiven Betreiben des Übertragungsmittels (101) und des variablen Verdrängungsmechanismus als Reaktion auf eine Beurteilung der zweiten Steuereinheit,
wobei die dritte Steuereinheit (13) den variablen Verdrängungsmechanismus so betreibt, daß eine Kapazität des Kompressors (100), von dem minimalen zu dem maximalen Wert davon variiert wird als Reaktion auf Änderungen in der Wärmebelastung auf den Verdampfer, wenn der Betrag der Anforderungen für die Beschleunigung des Kraftfahrzeuges kleiner als der vorbestimmte Betrag ist oder wenn sowohl der Betrag der Anforderung für die Beschleunigung des Kraftfahrzeuges gleich oder größer als der vorbestimmte Betrag ist als auch die Temperatur der Luft außerhalb des Kraftfahrzeuges kleiner als der erste vorbestimmte Betrag ist;
wobei die dritte Steuereinheit (13) das Übertragungsmittel so betreibt, daß es die Leistung zur Bewegung des Kraftfahrzeuges nicht zu dem Kompressor (100) überträgt, wenn sowohl der Betrag der Anforderung für die Beschleunigung des Kraftfahrzeuges gleich oder größer als der vorbestimmte Betrag ist als auch die Temperatur außerhalb des Kraftfahrzeuges größer als der zweite vorbestimmte Betrag ist;
wobei die dritte Betriebseinheit (13) weiter den variablen Verdrängungsmechanismus so betreibt, daß zwangsweise die Kapazität des Kompressors (100) auf den minimalen Wert darauf verringert wird, wenn sowohl der Betrag der Anforderung für die Beschleunigung des Kraftfahrzeuges gleich oder größer als der vorbestimmte Betrag ist als auch die Temperatur der Luft außerhalb des Kraftfahrzeuges gleich oder größer als der erste vorbestimmte Betrag ist, aber gleich oder kleiner als der zweite vorbestimmte Betrag ist.

**Revendications**

1. Système de conditionnement d'air d'automobile, comprenant
un compresseur (100) muni d'un mécanisme à déplacement variable, un évaporateur faisant partie du système de conditionnement d'air d'automobile, des moyens de commande pour commander le fonctionnement du compresseur, et des moyens de transmission (101) pour transmettre de manière intermittente au compresseur la puissance d'entraînement d'une automobile, les moyens de commande comprenant un détecteur (14) pour détecter la charge thermique appliquée à l'évaporateur ; un dispositif de commutation (15) pour détecter la quantité de demande d'accélération de l'automobile ; un premier bloc de commande (11) pour déterminer la quantité de couple agissant sur l'arbre d'entraînement du compresseur ; un second bloc de commande (12) pour estimer si la quantité de demande d'accélération de l'automobile est égale ou supérieure à une quantité prédéterminée, et pour estimer si la quantité de couple agissant sur l'arbre d'entraînement du compresseur est plus petite qu'une première quantité prédéterminée, plus grande qu'une seconde quantité prédéterminée supérieure à la première quantité prédéterminée, ou égale ou supérieure à la première quantité prédéterminée mais égale ou inférieure à la seconde quantité prédéterminée ; un troisième bloc de commande (13) pour faire fonctionner sélectivement les moyens de transmission (101) et le mécanisme à déplacement variable en réponse à une estimation du second bloc de commande, le troisième bloc de commande (13) faisant fonctionner le mécanisme à déplacement variable de manière à faire varier la capacité du compresseur (100) depuis sa valeur minimum jusqu'à sa valeur maximum, en réponse à des variations de la charge thermique appliquée à l'évaporateur lorsque la quantité de demande d'accélération de l'automobile est plus petite que la quantité prédéterminée, ou à la fois lorsque la quantité de demande d'accélération de l'automobile est égale ou supérieure à la quantité prédéterminée et lorsque la quantité de couple agissant sur l'arbre d'entraînement du compresseur est plus petite que la première quantité prédéterminée ; le troisième bloc de commande (13) faisant fonctionner les moyens de transmission de façon qu'ils ne transmettent pas au compresseur (100) la puissance d'entraînement de l'automobile à la fois lorsque la quantité de demande d'accélération de l'automobile est égale ou supérieure à la quantité prédéterminée et lorsque la quantité de couple agissant sur l'arbre d'entraînement du compresseur est supérieure à la seconde quantité prédéterminée ; le troisième bloc de commande (13) faisant en outre fonctionner le mécanisme à déplacement variable de manière à réduire de force la capacité du compresseur (100) à sa valeur minium à la fois lorsque la quantité de demande d'accélération de l'automobile est égale ou supérieure à la quantité prédéterminée et lorsque la quantité de couple agissant sur l'arbre d'entraînement du compresseur est égale ou supérieure à la première quantité prédéterminée, mais égale ou inférieure à la seconde quantité prédéterminée.

**2.** Système de conditionnement d'air d'automobile selon la revendication 1,
dans lequel
le détecteur est un thermodétecteur (14) destiné à détecter la température de l'air sortant juste de l'évaporateur.

**3.** Système de conditionnement d'air d'automobile selon la revendication 2,
dans lequel
le premier bloc de commande (11) détermine, a partir de la température détectée par le thermodétecteur (14), la quantité de couple agissant sur l'arbre d'entraînement du compresseur (100).

**4.** Système de conditionnement d'air d'automobile selon l'une quelconque des revendications précédentes,
dans lequel
l'automobile comprend un moteur sur lequel est prélevée la puissance d'entraînement de l'automobile.

**5.** Système de conditionnement d'air d'automobile selon la revendication 4,
dans lequel
le dispositif de commutation (15) est une pédale d'accélération utilisée pour le moteur.

**6.** Système de conditionnement d'air d'automobile selon la revendication 4 ou la revendication 5,
dans lequel
le second bloc de commande (12) est associé à la pédale d'accélération utilisée pour le moteur.

**7.** Système de conditionnement d'air d'automobile selon la revendication 4 ou la revendication 5,
dans lequel
le dispositif de commutation est un commutateur de pression associé à une tubulure d'admission utilisée pour le moteur.

**8.** Système de conditionnement d'air d'automobile selon la revendication 4 ou la revendication 5,
dans lequel
le dispositif de commutation est un dispositif de commutation associé à un dispositif d'étranglement utilisé pour le moteur.

**9.** Système de conditionnement d'air d'automobile selon l'une quelconque des revendications précédentes,
dans lequel
les moyens de transmission consistent en un embrayage électromagnétique (101).

**10.** Système de conditionnement d'air d'automobile selon la revendication 9,
dans lequel
l'embrayage électromagnétique (101) comprend une bobine électromagnétique.

**11.** Système de conditionnement d'air d'automobile selon l'une quelconque des revendications précédentes,
dans lequel
le mécanisme à déplacement variable comprend un dispositif à soupape, commandé de l'extérieur, muni d'une bobine de solénoïde.

**12.** Système de conditionnement d'air d'automobile, comprenant
un compresseur (100) muni d'un mécanisme à déplacement variable, un évaporateur faisant partie du système de conditionnement d'air d'automobile, des moyens de commande pour commander le fonctionnement du compresseur, et des moyens de transmission (101) pour transmettre de manière intermittente au compresseur la puissance d'entraînement d'une automobile, les moyens de commande comprenant un détecteur (14) pour détecter une charge thermique appliquée à l'évaporateur ; un dispositif de commutation (15) pour détecter une quantité de demande d'accélération de l'automobile ; un second détecteur (16) pour détecter la température de l'air à l'extérieur de l'automobile ; un second bloc de commande (12') pour estimer si la quantité de demande d'accélération de l'automobile est égale ou supérieure à une quantité prédéterminée, et pour estimer si la température de l'air à l'extérieur de l'automobile est plus petite qu'une première quantité prédéterminée, plus grande qu'une seconde quantité prédéterminée elle même supérieure à la première quantité prédéterminée, ou égale ou supérieure à la première quantité prédéterminée mais égale ou inférieure à la seconde quantité prédéterminée ; un troisième bloc de commande (13) pour faire fonctionner sélectivement les moyens de transmission (101) et le mécanisme à déplacement variable en réponse à une estimation du second bloc de commande, le troisième bloc de commande (13) faisant fonctionner le mécanisme à déplacement variable de manière à faire varier la capacité du compresseur (100) de sa valeur minimum à sa valeur maximum, en réponse à des variations de la charge thermique appliquée à l'évaporateur lorsque la quantité de demande d'accélération de l'automobile est plus petite que la quantité prédéterminée, ou à la fois lorsque la quantité de demande d'accélération de l'automobile est égale ou supérieure à la quantité prédéterminée et lorsque la température de l'air à l'extérieur de l'automobile est inférieure à la première quantité prédéterminée ; le troisième bloc de commande (13) faisant fonctionner les moyens de transmission de manière à ne pas transmettre au compresseur (100) la puissance d'entraînement de l'automobile à la fois lorsque la quantité de demande d'accélération de l'automobile est égale ou supérieure à la quantité prédéterminée, et lorsque la température de l'air à l'extérieur de l'automobile est supérieure à la seconde quantité prédéterminée ; le troisième bloc de fonctionnement (13) faisant en outre fonctionner le mécanisme à déplacement variable de manière à réduire de force la capacité du compresseur (100) à sa valeur minimum à la fois lorsque la quantité de demande d'accélération de l'automobile est égale ou supérieure à la quantité prédéterminée, et lorsque la température de l'air à l'extérieur de l'automobile est égale ou supérieure à la première quantité prédéterminée, mais égale ou inférieure à la seconde quantité prédéterminée.

Maximum Displacement of Compressor
Forcible Reduction of Compressor Capacity
Deenergization of Electromagnetic Clutch
Surplus Power
Minimum Displacement of Compressor
(second)
Elapsed Time
At a Time When Compensation Required
(Kg·m)
2.0
1.5
1.0
0.5
Torque Acting on Compressor Drive Shaft

Fig. 1 (Prior Art)

Fig. 2
Thermo-sensor for detecting temperature of air immediately leaving from Evaporator
14
Switching Device associated with Acceleration Pedal of Automobile
15
S1
10
First Control Unit
11
S2
Second Control Unit
12
S2, S3, S4
S5, S6
Compressor with Externally Controlled Variable Displacement Mechanism
100
Third Control Unit
13
Electromagnetic Clutch
101

Fig. 3
(Kg/cm²·G)
5.0
4.0
3.0
2.0
1.0
Pressure
(Kg·m)
2.0
1.5
1.0
0.5
Torque
0
0.2
0.4
0.6
0.8
1.0
1.2
1.4 (A)
Amperage
Control Point of Suction Chamber Pressure
Torque Acting on Compressor Drive Shaft
Imin
(Maximum Displacement)
Ia
Ib
Imax
(Minimum Displacement)
Larger Displacement
Intermediate Displacement
Smaller Displacement

Fig. 4

START
A/C ON
201
n = 0
202
Clutch ON
203
n = 0
204
N
Y
Switching Device ON
301
N
Y
205
206
N
Clutch OFF
Y
208
Y
302
Y
N
N
Y
207
N
Timer 1 ON
Timer 2 ON
303
304
Y
209
N
305
306
Clutch OFF
I = Imax
First Predetermined Time Elapsed
N
308
Y
N
307
Y
211
Y
212
N
213
210
I = Imax
I = In
I = Imin
Clutch ON
309
I = In
310
n = n+1
214
Reset Timer 1
311
215
N
A/C OFF
Y
Second Predetermined Time Elapsed
N
312
Y
END
Reset Timer 2
313

Fig. 5
Switching Device
ON
OFF
Electric Current
Imax
Imin
Electromagnetic Clutch
ON
OFF
Time
(a)
(b)
(c)
(d)

Fig. 6
101
100
Electromagnetic Clutch
Compressor with Externally Controlled Variable Displacement Mechanism
10'
Thermo-sensor for detecting temperature of air immediately leaving from Evaporator
14
Third Control Unit
S2, S3, S4
First Control Unit
13
11
12'
15
Switching Device associated with Acceleration Pedal of Automobile
S5, S6
Second Control Unit
S7
Auxiliary Thermo-sensor for detecting temperature of Automobile outside Air
16

Compressor with Externally Controlled Variable Displacement Mechanism
Torque Acting on Compressor Drive Shaft
(Kg·m)
2.0
1.0
10
20
30
40
(°C)
Ts
$T_{S1}$
$T_{S2}$
Temperature of Automobile Outside Air

Fig. 7

Fig. 8

START
A/C ON
201
n = 0
202
Clutch ON
203
n = 0
204
N
Y
Switching Device ON
301
205
206
Clutch OFF
302'
208
Y
N
Timer 1 ON
Timer 2 ON
303
207
304'
306
305
209
I = Imax
Clutch OFF
First Predetermined Time Elapsed
308
307
211
210
212
213
I = Imax
I = In
I = Imin
Clutch ON
309
I = In
310
n = n + 1
214
Reset Timer 1
311
215
A/C OFF
Second Predetermined Time Elapsed
312
END
Reset Timer 2
313

Fig. 9
Condition of Temperature of Automobile Outside Air
Switching Device
Electromagnetic Clutch
Electric Current
ON
OFF
ON
OFF
Imax
Imin
Time
(a)
(b)
(c)
(d)